# EUROPEAN PATENT SPECIFICATION

(11) **EP 2 939 752 B1**
(45) Date of publication and mention of the grant of the patent: **24.08.2016**
(21) Application number: 15165872.1
(22) Date of filing: 30.04.2015
(51) Int. Cl.: B21D 3/02, B21C 51/00, B21D 5/14

(54) **APPARATUS FOR WORKING TUBES, BARS, SECTIONS AND SIMILAR BLANKS, COMPRISING A PLURALITY OF MACHINES ARRANGED IN LINE**
VORRICHTUNG ZUM BEARBEITEN VON ROHREN, STANGEN, PROFILEN UND ÄHNLICHEN ROHTEILEN MIT MEHREREN MASCHINEN, DIE IN REIHE ANGEORDNET SIND
APPAREIL POUR LE TRAVAIL DE TUBES, BARRES, SECTIONS ET ÉBAUCHES SIMILAIRES, COMPRENANT UNE PLURALITÉ DE MACHINES DISPOSÉES EN LIGNE

(30) Priority: 02.05.2014 IT TO20140357
(43) Date of publication of application: 04.11.2015
(73) Proprietor: CTE Sistemi S.r.l., 16128 Genova (IT)
(72) Inventor: Dani, Marco, I-16125 Genova (IT)
(74) Representative: Rondano, Davide

(56) References cited:
- WO-A1-2009/135845
- US-A- 3 646 599
- US-A- 5 069 382
- US-A- 5 343 725
- Pf: "PF Coil Fabrication Overview", , 15 October 2012 (2012-10-15), XP055124576, Retrieved from the Internet: URL:https://industryportal.f4e.europa.eu/D ocuments/F4E PF Coils Info Day - 3. Fabrication JF.pdf [retrieved on 2014-06-23]

## Description

The present invention relates to an apparatus for working elongated blanks, such as for example tubes, bars, sections and strips, comprising a plurality of machines that are arranged in line and are provided with motor-driven rollers, or other motor-driven working members, adapted to act at the same time on the blank under working so as to apply thereon forces having a component directed in the longitudinal direction, i.e. in the direction along which the blank is moved along the apparatus.

The invention has been conceived and will be illustrated herein with particular reference to an apparatus for forming superconductive coils from a conductor consisting in a hollow section of stainless steel, but it is however applicable, as will become apparent from the following description, to any other apparatus for working elongated blanks such as tubes, bars, sections, strips and the like, comprising a plurality of machines arranged in line for working simultaneously on the same blank.

A typical apparatus for forming superconductive coils basically comprises an unwinding and straightening unit and a bending and winding unit. The unwinding and straightening unit is designed to unwind a vertical axis coil, formed by the conductor that is bent with a constant radius and is wound along a cylindrical helical path, and to supply straightened conductor. To this end, the unwinding and straightening unit makes the coil rotate about its vertical axis and at the same time straightens the conductor leaving the coil by means of a straightening device. The bending and winding unit comprises a bending device arranged to bend the straightened conductor and a rotary table on which the bent conductor leaving the bending device is laid, whereby a set of turns is formed to make the superconductive coil to be produced. Additional devices may be provided between the unwinding and straightening unit and the bending and winding unit, which devices are arranged to work on the straightened conductor leaving the unwinding and straightening unit and include for example one or more fine straightening devices placed downstream of the straightening device to further straighten the conductor.

The workings the conductor has to be subjected to between the initial straightening step and the final bending step are carried out by means of machines that are arranged in line along the straight portion of conductor comprised between the unwinding and straightening unit and the bending and winding unit and are provided with working members, such as for example rollers, that are driven into rotation by respective motors to act on the conductor so as to apply on it forces having a longitudinal component.

In such an apparatus the rotation of the motor-driven working members of the various machines must obviously be controlled so as to avoid relative slip with respect to the conductor, as well as risks of instability of the conductor due to buckling.

A possible mode for controlling the motor-driven working members consists in synchronizing the speed/position of the various machines arranged in line. Such a control mode is however affected by a number of drawbacks.

First of all, even though the forward movement of the conductor is clearly the same for all the machines, this does not necessarily mean that all the rollers must have the same peripheral speed. Both the first straightening machine and the bending machine have, in fact, motor-driven rollers acting on a curved portion (furthermore, a curved portion having a non-constant radius of curvature, particularly in the bending machine) where the speed on the extrados and the speed on the intrados are higher and lower, respectively, than the speed in the straight portion of the conductor. The same applies to the fine straightening machines fine, in which the conductor is slightly deformed into a S-like shape. Such differences in the peripheral speed produce longitudinal forces on the conductor that lead to slip (in case of traction forces) or to slip and/or buckling instability (in case of compression forces).

Secondly, the overall transmission ratio of a roller machine might be approximate, instead of definite. Therefore, imposing a speed/position synchronization with other machines arranged in line leads to the errors made in the assessment of the transmission ratio to add up and inevitably causes generation of longitudinal traction or compression forces on the conductor that produce slip and/or buckling instability. The same effect is also produced by the geometric differences, though small, between the machines - ideally identical to each other - that are arranged in line, which differences are due to the manufacturing tolerances of the machines.

It is therefore an object of the present invention to provide an apparatus for working elongated blanks, such as for example tubes, bars, sections and strips, of the type comprising a plurality of machines that are arranged in line and are provided with working members driven into rotation by motors to act at the same time on the blank under working so as to apply on it forces having a longitudinal component, which apparatus is able to prevent slip and/or buckling instability from affecting the blank under working.

This and other objects are fully achieved according to the present invention by virtue of an apparatus having the features set forth in the accompanying independent claim 1.

Advantageous embodiments of the invention are the subject-matter of the dependent claims, the content of which is to be regarded as being an integral and integrating part of the following description.

In short, the invention is based on the idea of providing each machine of the apparatus with measuring means for measuring the overall reaction exerted by the blank on that machine along the longitudinal direction and of controlling the motors associated to the working members of each machine in such a manner that the overall reaction exerted by the blank on that machine along the longitudinal direction is equal to a predetermined value, zero included.

Imposing that the overall reaction exerted by the blank on a machine in the longitudinal direction is equal to zero means that the torques exerted on the blank by the motor-driven working members of that machine are those strictly necessary to carry out the working (straightening, bending, etc.) for which that machine is designed. In such conditions, the machine is neutral with respect to the blank and undesired slips between the motor-driven working members of the machine and the blank are avoided.

The motors associated to the motor-driven working members may also be controlled so as to impose a reaction of the blank on the machine along the longitudinal direction other than zero, for example in cases where it is necessary to ensure that a certain traction force is applied on the blank.

Preferably, in order to make it possible to measure the overall reaction exerted by the blank on the machine along the longitudinal direction, the machine is mounted on a support structure with one translational degree of freedom in the longitudinal direction and measuring means are also provided between the machine and the support structure to measure the force exerted on the machine in that direction, which force represents the overall reaction exerted by the blank on the machine in that direction. The machine may for example be mounted on the support structure by means of low-friction linear guides, such as rolling-contact guides, and a load cell, or similar force measuring device, may be mounted between the machine and the support structure to measure the force acting on the machine (as a result of the reaction exerted by the blank) in the longitudinal direction.

The features and advantages of the present invention will become more apparent from the following detailed description, given purely by way of non-limiting example with reference to the accompanying drawings, where:
Figure 1 schematically shows an apparatus for forming superconductive coils as an example of an apparatus for working elongated blanks comprising a plurality of machines arranged in line to which the present invention is applicable;
Figure 2 is a perspective view of a bending machine forming part of the apparatus of Figure 1;
Figure 3 is a perspective view showing in detail, on an enlarged scale, the force measuring device for measuring the force exerted by the blank in the longitudinal direction on the bending machine of Figure 2; and
Figure 4 is a side elevation view of the bending machine of Figure 2.

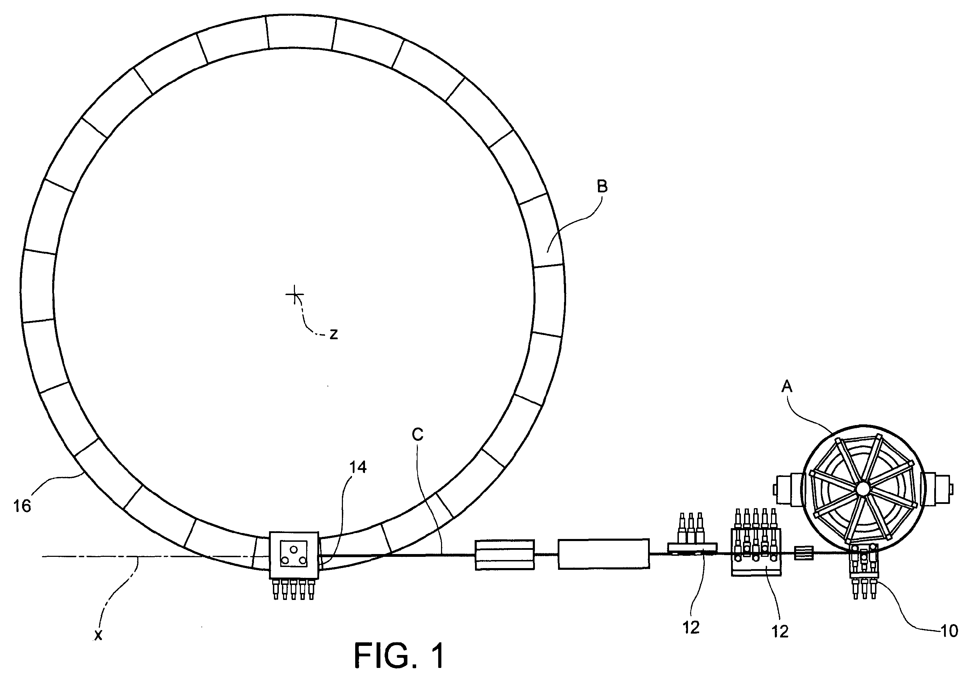

With reference first to Figure 1, an apparatus for making superconductive coils B from a conductor C consisting in a hollow section of stainless steel wound along a cylindrical helical path with a constant radius to form a coil A comprises a plurality of machines arranged in line along a longitudinal direction x coinciding with the feed direction along which the conductor C is moved forward.

More specifically, in the embodiment illustrated in Figure 1 the apparatus comprises a first straightening machine 10 for straightening the conductor C that is being unwound from the coil A, one or more additional straightening machines 12 for fine-straightening the conductor C coming from the first straightening machine 10 and a bending machine 14 for bending the conductor C with the desired radius of curvature to form, in cooperation with a rotary table 16 rotatably mounted about a vertical axis of rotation z, the coil B. The apparatus further comprises a feeding device (not shown in detail) for moving the blank forward in the longitudinal direction x with a given forward speed. The machines 10, 12 and 14, as well as the feeding device, are of per-se-known type and will not therefore be described in detail herein. It is worth mentioning, for the purposes of the present invention, that all these machines are provided with motor-driven working members, in particular motor-driven rollers, each of which is driven into rotation by a respective motor, in particular an electric motor or hydraulic motor, about a respective axis of rotation, the working members having both the function of driving the conductor C by friction, making it move forward in the longitudinal direction x, and the function of deforming the conductor C to straighten it (it is the case with the rollers of the straightening machines 10 and 12) or to bend it (it is the case with the rollers of the bending machine 14).

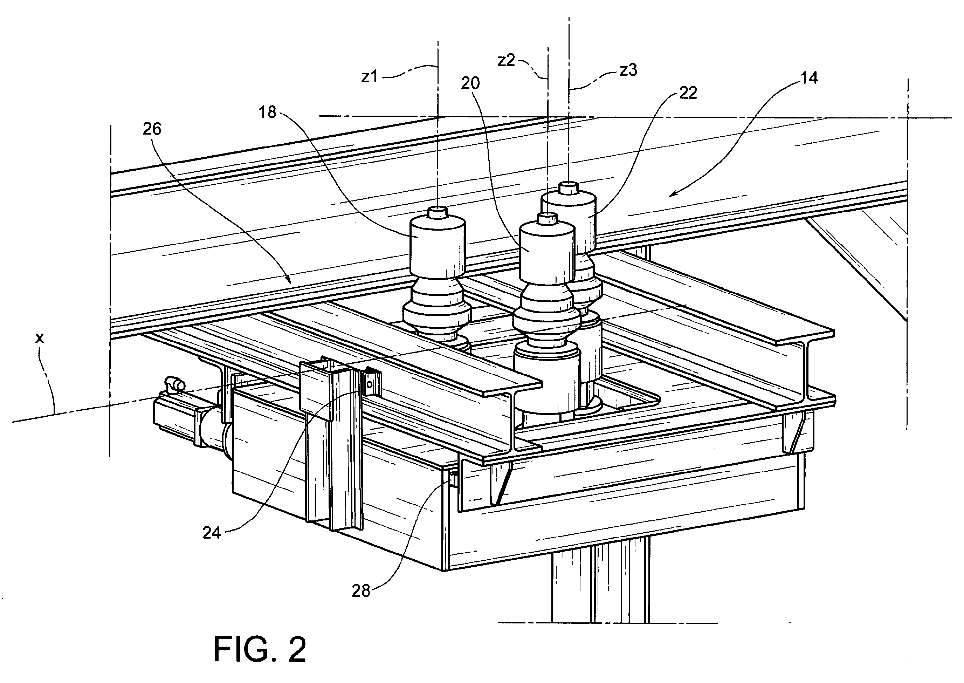

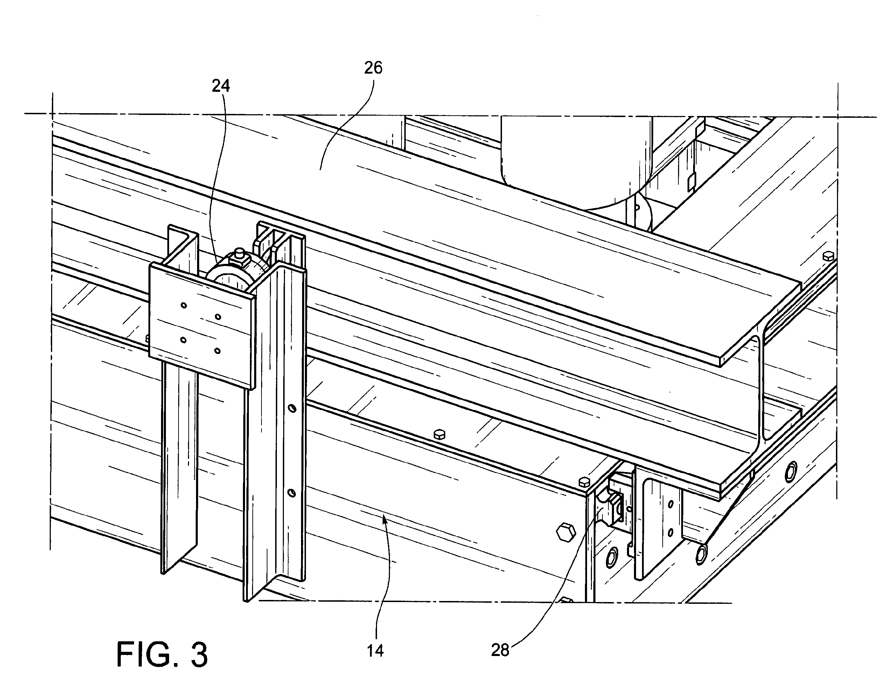

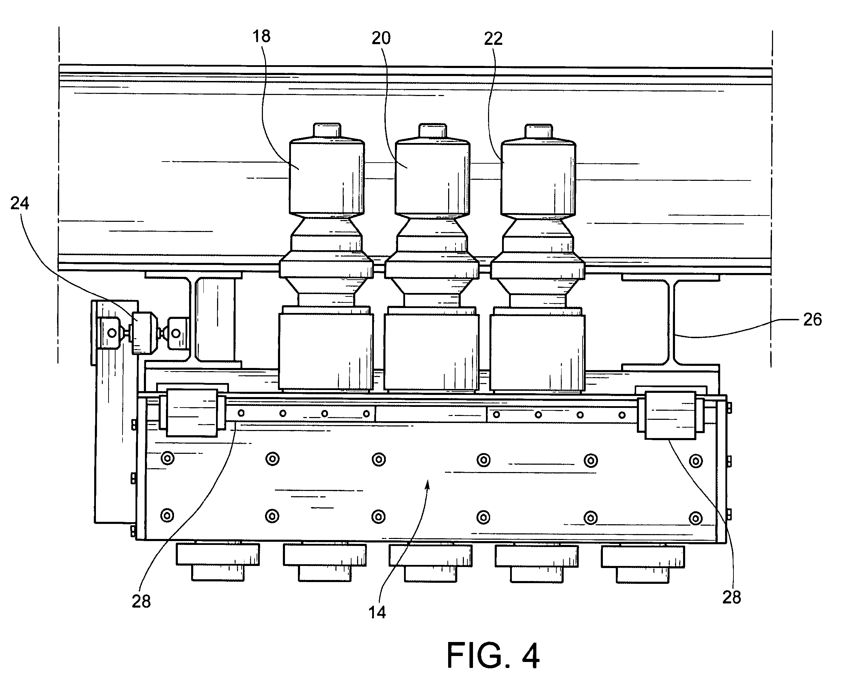

With reference now to Figures 2 to 4, the bending machine 14 comprises, in per-se-known manner, three rollers 18, 20 and 22, namely a first roller 18 rotatable about a vertical axis of rotation z1, an intermediate roller 20 rotatable about a vertical axis of rotation z2 and a bending roller 22 rotatable about a vertical axis of rotation z3. The three rollers 18, 20 and 22 are arranged in such a manner that the conductor C (not shown in Figures 2-4) moves across the bending machine 14 with the first roller 18 and the bending roller 20 on one side of the conductor and the intermediate roller 22 on the opposite side. The bending machine might also have an arrangement other than the one shown herein, for example comprise additional rollers beyond the three ones mentioned above.

The three rollers 18, 20 and 22 are driven into rotation about the respective axes of rotation z1, z2 and z3 by respective electric motors (not shown, but of per-se-known type). According to the invention, the electric motors are torque-controlled by a control unit (not shown) so as to apply on the respective rollers 18, 20 and 22 a torque such that the overall reaction exerted by the conductor C on said rollers, and hence on the machine, in the longitudinal direction x is equal to a predetermined value, for example zero. The overall reaction exerted by the conductor on the machine is thus used by the control unit as feedback variable to correct the torques applied to the single rollers of the machine.

According to the embodiment shown in the drawings, a measuring device 24 is associated to the bending machine 14 to measure the overall reaction exerted by the conductor C on the machine in the longitudinal direction x. The control unit is arranged to calculate, on the basis of the value of the overall reaction exerted by the conductor C on the bending machine 14 provided by the measuring device 24, the torque to be applied on each roller 18, 20 and 22 in order to meet the aforesaid condition that the reaction is equal to the predetermined value.

The torque to be applied on each motor-driven roller of the machine to meet the aforesaid condition on the value of the overall reaction exerted by the machine may for example be determined by defming in advance a criterion of proportionality between the torque values of the single rollers. The criterion of proportionality between the torque values of the single rollers in the same machine is based on the modulus of the normal force exchanged between the conductor and the rollers, which modulus is approximately known from the laws of statics, at least in so far as its component perpendicular to the longitudinal direction x of the conductor (which is the very main component) is concerned. For example, in a bending machine with three rollers like the one shown in Figures 2-4, where the longitudinal pitch between the rollers 18, 20 and 22 is the same, at least in case of large radiuses the conductor C can be modelled as a beam simply supported at its end and loaded at its centre and therefore the normal force exchanged between the intermediate roller 20 and the conductor C is approximately twice the normal force exchanged between each of the two end rollers (first roller 18 and bending roller 22) and the conductor C. The torque to be applied on the rollers 18, 20 and 22 will follow the same proportion, so that in the three rollers the same proportion is also ensured between the longitudinal force exchanged between the roller and the conductor and the maximum longitudinal force admissible before slipping, as the friction angle is most probably the same for the three rollers.

Alternatively, the torque to be applied on each of the motor-driven rollers of the machine can be established from the actual measure of the normal force exchanged between the conductor and each motor-driven roller.

Advantageously, in order to make it possible to measure the overall reaction exerted by the conductor C on the bending machine 14 in the longitudinal direction x, the machine is mounted on a support structure 26 with a translational degree of freedom in the longitudinal direction x and the measuring device 24 is connected on one side to the bending machine 14 and on the other to the support structure 26 to measure the force exerted on that machine along the longitudinal direction x, which force represents the overall reaction exerted by the conductor C on the rollers 18, 20 and 22 of the machine. In the example proposed herein, the bending machine 14 is mounted on low-friction linear guides 28, such as rolling-contact guides, which are fixed to the support structure 26 and are directed along the longitudinal direction x, and a load cell, as measuring device 24, is mounted between the machine 14 and the support structure 26.

The description given above with reference to the bending machine 14 is applicable to all the other machines (first straightening machine 10 and additional straightening machine(s) 12) forming part of the apparatus. In these machines, also, the motors driving the motor-driven rollers will be in fact torque-controlled by the respective control systems so as to apply on the respective rollers a torque such that the overall reaction exerted by the conductor on the machine in the longitudinal direction is equal to a predetermined value, for example zero, and suitable measuring means will be provided for to measure the overall reaction exerted by the conductor on the machine.

One of the advantages of the invention consists therefore in that each machine of the apparatus is able to adjust itself by means of a simple local feedback loop, with no need of a complex coordinated control of the various machines arranged in line.

Naturally, the principle of the invention remaining unchanged, the embodiments and the constructional details may be greatly modified with respect to those described and illustrated purely by way of a non-limiting example, without thereby departing from the scope of protection as defined in the appended claims.

## Claims

1. Apparatus for working elongated blanks (C), such as tubes, bars, sections and strips, comprising a plurality of machines (10, 12, 14) arranged in line along a longitudinal direction (x) coinciding with a feed direction of the blank (C),
each of said machines (10, 12, 14) comprising at least one working member (18, 20, 22), which is rotatably mounted about an axis of rotation (z1, z2, z3) and is adapted to work on the blank (C) so as to apply on it a force having a component directed along the longitudinal direction (x), motor means for driving said at least one working member (18, 20, 22) into rotation, and a control unit for controlling said motor means,
**characterized in that** each machine (10, 12, 14) is provided with measuring means (24) for providing the control unit of said machine with a measure of the overall reaction exerted in operation by the blank (C) on said machine along the longitudinal direction (x) and **in that** the control unit of each machine (10, 12, 14) is arranged to control said motor means in such a manner that the value, provided by said measuring means, of the overall reaction exerted in operation by the blank (C) on said machine along the longitudinal direction (x) is equal to a predetermined value, zero included.

2. Apparatus according to claim 1, wherein at least one of said machines (10, 12, 14) is mounted on a respective support structure (26) with a translational degree of freedom in the longitudinal direction (x) and wherein the measuring means (24) of said at least one machine (10, 12, 14) are interposed between the machine (10, 12, 14) and the support structure (26).

3. Apparatus according to claim 2, wherein said at least one machine (10, 12, 14) is mounted on the respective support structure (26) by means of linear guides (28).

4. Apparatus according to claim 2 or claim 3, wherein said measuring means (24) comprise a load cell connected on one side to said at least one machine (10, 12, 14) and on the other to the respective support structure (26).

5. Apparatus according to any of the preceding claims, wherein said motor means comprise, for each working member (18, 20, 22), a respective motor.

6. Apparatus according to claim 5, wherein the control unit of each machine (10, 12, 14) is arranged to torque-control each motor of said machine.

7. Apparatus according to claim 6, wherein the control unit of at least one of said machines (10, 12, 14) is arranged to define the torques to be applied by the motors of said machine on the basis of a predefined proportionality criterion.

8. Apparatus according to claim 6, wherein at least one of said machines (10, 12, 14) comprises additional measuring means for measuring the normal force exerted between the blank and each working member (18, 20, 22) and wherein the control unit of said at least one machine (10, 12, 14) is arranged to define the torques to be applied by the motors of said machine on the basis of the force measures provided by said additional measuring means.

## Patentansprüche

1. Vorrichtung zum Bearbeiten von länglichen Rohlingen (C) wie beispielsweise Röhren, Stäben, Profilen und Streifen, die eine Mehrzahl von Maschinen (10, 12, 14) aufweist, die entlang einer Längsrichtung (x), die sich mit einer Zuführrichtung des Rohlings (C) deckt, in Reihe angeordnet sind,
wobei jede der Maschinen (10, 12, 14) zumindest ein Bearbeitungsbauglied (18, 20, 22), das um eine Drehachse (z1, z2, z3) herum drehbar befestigt ist und angepasst ist, den Rohling (C) zu bearbeiten, um auf dieselbe eine Kraft auszuüben, die eine entlang der Längsrichtung (x) ausgerichtete Komponente aufweist, eine Motoreinrichtung, um das zumindest eine Bearbeitungsbauglied (18, 20, 22) in Drehung zu versetzen, und eine Steuereinheit zum Steuern der Motoreinrichtung aufweist,
**dadurch gekennzeichnet, dass** jede Maschine (10, 12, 14) mit einer Messeinrichtung (24) versehen ist, um die Steuereinheit der Maschine mit einem Maß der Gesamtreaktion, die in Betrieb durch den Rohling (C) entlang der Längsrichtung (x) auf die Maschine ausgeübt wird, zu versorgen, und dadurch, dass die Steuereinheit jeder Maschine (10, 12, 14) angeordnet ist, um die Motoreinrichtung auf eine Weise zu steuern, dass der durch die Messeinrichtung bereitgestellte Wert der Gesamtreaktion, die in Betrieb durch den Rohling (C) entlang der Längsrichtung (x) auf die Maschine ausgeübt wird, gleich einem vorbestimmten Wert, einschließlich null, ist.

2. Vorrichtung gemäß Anspruch 1, bei der zumindest eine der Maschinen (10, 12, 14) mit einem Translationsfreiheitsgrad in der Längsrichtung (x) auf einer jeweiligen Trägerstruktur (26) befestigt ist und bei der die Messeinrichtung (24) der zumindest einen Maschine (10, 12, 14) zwischen der Maschine (10, 12, 14) und der Trägerstruktur (26) eingefügt ist.

3. Vorrichtung gemäß Anspruch 2, bei der die zumindest eine Maschine (10, 12, 14) mittels linearer Führungseinrichtungen (28) auf der jeweiligen Trägerstruktur (26) befestigt ist.

4. Vorrichtung gemäß Anspruch 2 oder Anspruch 3, bei der die Messeinrichtung (24) eine Kraftmessdose aufweist, die an einer Seite mit der zumindest einen Maschine (10, 12, 14) und an der anderen mit der jeweiligen Trägerstruktur (26) verbunden ist.

5. Vorrichtung gemäß einem der vorhergehenden Ansprüche, bei der die Motoreinrichtung für jedes Bearbeitungsbauglied (18, 20, 22) einen jeweiligen Motor aufweist.

6. Vorrichtung gemäß Anspruch 5, bei der die Steuereinheit jeder Maschine (10, 12, 14) angeordnet ist, um jeden Motor der Maschine einer Drehmomentsteuerung zu unterziehen.

7. Vorrichtung gemäß Anspruch 6, bei der die Steuereinheit zumindest einer der Maschinen (10, 12, 14) angeordnet ist, um auf der Basis eines vordefinierten Verhältnismäßigkeitskriteriums die Drehmomente zu definieren, die durch die Motoren der Maschine anzulegen sind.

8. Vorrichtung gemäß Anspruch 6, bei der zumindest eine der Maschinen (10, 12, 14) eine zusätzliche Messeinrichtung zum Messen der Normalkraft aufweist, die zwischen dem Rohling und jedem Bearbeitungsbauglied (18, 20, 22) ausgeübt wird, und bei der die Steuereinheit der zumindest einen Maschine (10, 12, 14) angeordnet ist, um auf der Basis der Kraftmessungen, die durch die zusätzliche Messeinrichtung bereitgestellt werden, die Drehmomente zu definieren, die durch die Motoren der Maschine anzulegen sind.

## Revendications

1. Appareil pour le travail d'ébauches allongées (C), telles que des tubes, des barres, des sections et des bandes, comprenant une pluralité de machines (10, 12, 14) disposées en ligne le long d'une direction longitudinale (x) coïncidant avec une direction de fourniture de l'ébauche (C),
chacune desdites machines (10, 12, 14) comprenant au moins un organe de travail (18, 20, 22), qui est monté de manière rotative autour d'un axe de rotation (z1, z2, z3) et est adapté pour travailler sur l'ébauche (C) de sorte à appliquer sur elle une force ayant une composante dirigée le long de la direction longitudinale (x), des moyens moteurs pour entraîner ledit au moins un organe de travail (18, 20, 22) en rotation, et une unité de commande pour commander lesdits moyens moteurs,
**caractérisé en ce que** chaque machine (10, 12, 14) est pourvue de moyens de mesure (24) pour fournir à l'unité de commande de ladite machine une mesure de la réaction globale exercée en fonctionnement par l'ébauche (C) sur ladite machine le long de la direction longitudinale (x) et **en ce que** l'unité de commande de chaque machine (10, 12, 14) est conçue pour commander lesdits moyens moteurs de telle manière que la valeur, fournie par lesdits moyens de mesure, de la réaction globale exercée en fonctionnement par l'ébauche (C) sur ladite machine le long de la direction longitudinale (x) est égale à une valeur prédéterminée, zéro inclus.

2. Appareil selon la revendication 1, dans lequel au moins l'une desdites machines (10, 12, 14) est montée sur une structure de support respective (26) avec un degré de liberté en translation dans la direction longitudinale (x) et dans lequel les moyens de mesure (24) de ladite au moins une machine (10, 12, 14) sont interposés entre la machine (10, 12, 14) et la structure de support (26).

3. Appareil selon la revendication 2, dans lequel ladite au moins une machine (10, 12, 14) est montée sur la structure de support (26) respective au moyen de guides linéaires (28).

4. Appareil selon la revendication 2 ou la revendication 3, dans lequel lesdits moyens de mesure (24) comprennent une cellule de charge reliée sur un côté à ladite au moins une machine (10, 12, 14) et sur l'autre à la structure de support (26) respective.

5. Appareil selon l'une quelconque des revendications précédentes, dans lequel lesdits moyens moteurs comprennent, pour chaque organe de travail (18, 20, 22), un moteur respectif.

6. Appareil selon la revendication 5, dans lequel l'unité de commande de chaque machine (10, 12, 14) est conçue pour réguler le couple de chaque moteur de ladite machine.

7. Appareil selon la revendication 6, dans lequel l'unité de commande d'au moins une desdites machines (10, 12, 14) est conçue pour définir les couples devant être appliqués par les moteurs de ladite machine sur la base d'un critère de proportionnalité prédéfini.

8. Appareil selon la revendication 6, dans lequel au moins une desdites machines (10, 12, 14) comprend des moyens de mesure supplémentaires pour mesurer la force normale exercée entre l'ébauche et chaque organe de travail (18, 20, 22) et dans lequel l'unité de commande de ladite au moins une machine (10, 12, 14) est conçue pour définir les couples devant être appliqués par les moteurs de ladite machine sur la base des mesures de force fournies par lesdits moyens de mesure supplémentaires.
